# EUROPÄISCHE PATENTSCHRIFT

(11) **EP 2 505 851 B1**
(45) Veröffentlichungstag und Bekanntmachung des Hinweises auf die Patenterteilung: **31.07.2019**
(21) Anmeldenummer: 12161404.4
(22) Anmeldetag: 27.03.2012
(51) Int. Cl.: F04D 29/52, F04D 29/54, F04D 29/68, F01D 5/14

(54) **Stator einer Axialverdichterstufe einer Turbomaschine**
Stator stage of an axial compressor for a turbomachine
Aubage de stator pour un compresseur axial dans une turbomachine

(30) Priorität: 28.03.2011 DE 102011006275
(43) Veröffentlichungstag der Anmeldung: 03.10.2012
(73) Patentinhaber: Rolls-Royce Deutschland Ltd & Co KG, 15827 Blankenfelde-Mahlow (DE)
(72) Erfinder: Heinichen, Frank, 12101 Berlin (DE); Johann, Erik, 10963 Berlin (DE)
(74) Vertreter: Maikowski & Ninnemann Patentanwälte Partnerschaft mbB

(56) Entgegenhaltungen:
- WO-A2-2011/039352
- US-A1- 2006 140 768
- US-A1- 2007 059 177
- US-A1- 2007 224 038
- US-B1- 6 561 761

## Beschreibung

Die Erfindung betrifft einen Stator einer Axialverdichterstufe einer Turbomaschine. Derartige Statoren werden beispielsweise in Strahltriebwerken eingesetzt.

Axialverdichter bestehen üblicherweise aus einer Mehrzahl von Verdichterstufen, die jeweils einen Rotor und einen Stator umfassen, die unmittelbar hintereinander geschaltet sind. An dem Rotor sind eine Vielzahl von aerodynamisch geformten Körpern angeordnet, die als Laufschaufeln bezeichnet werden. Ebenso sind an dem Stator eine Vielzahl aerodynamisch geformter Körper angeordnet, die als Leitschaufeln bezeichnet werden. Die Laufschaufeln und die Leitschaufeln befinden alternierend sich in einem Strömungskanal des Verdichters.

Aus der Druckschrift EP 1 087 100 B1 ist eine Rotorkonfiguration bekannt, bei der die äußere Oberfläche des Umfangskranzes des Rotors im Bereich zwischen zwei Laufschaufeln konkav gekrümmt ist. Hierdurch soll die Kurzzeitschwingfestigkeit ("low cycle fatigue") des Umfangskranzes verbessert werden.

Ein Stator einer Axialverdichterstufe einer Turbomaschine bei dem eine Kranzoberfläche eines Schaufelkranzes in einem Teilbereich sowohl in axialer Richtung als auch in Umfangsrichtung einen sich verändernden Radius bezogen auf eine Mittelachse des Stators aufweist, ist beispielsweise aus den Druckschriften US 2007/059177 A1, US 2007/0224038 A1 und US 6 561 761 B1 bekannt.

Es besteht ein Bedarf nach technischen Lösungen, die die Strömung im Schaufelkanal zwischen jeweils zwei Leitschaufeln eines Stators verbessern. Insbesondere ist es anzustreben, den Wirkungsgrad und die Stabilität der Strömung zu verbessern und die Gefahr einer Strömungsablösung an den Schaufeln zu reduzieren.

Dies wird durch einen Stator mit den Merkmalen des Anspruchs 1 erreicht.

Die Lehre des Anspruchs 1 sieht hierzu vor, dass bei einem Stator, der einen radial außen liegenden Schaufelkranz mit einer äußeren Kranzoberfläche und einen radial innen liegenden Schaufelkranz mit einer inneren Kranzoberfläche aufweist, die äußere Kranzoberfläche und/oder die innere Kranzoberfläche zumindest in einem Teilbereich sowohl in axialer Richtung als auch in Umfangsrichtung einen sich verändernden Radius bezogen auf eine Mittelachse des Stators aufweisen. Somit sind die radial innen liegende Begrenzungsfläche und/oder die radial außen liegende Begrenzungsflächen eines Schaufelkanals, der durch zwei benachbarte Leitschaufeln und die genannten Kranzoberflächen des Stators gebildet wird, dreidimensional konturiert.

Die erfindungsgemäße Lösung sieht danach vor, die äußere, gehäuseseitige Oberfläche und/oder die innere, nabenseitige Oberfläche der Struktur, die die Leitschaufeln innenseitig und außenseitig begrenzt, dreidimensional zu konturieren. Insbesondere ist vorgesehen, dass sich der Radius der jeweiligen Oberfläche sowohl in axialer Richtung (d.h. in Strömungsrichtung) als auch in Umfangsrichtung verändert. Dies bedeutet, dass - in zumindest einem Teilbereich der jeweiligen Oberfläche - benachbarte Punkte der Oberfläche sowohl in Umfangsrichtung als auch in axialer Richtung einen unterschiedlichen Abstand zur Mittelachse des Stators aufweisen.

Die erfindungsgemäße dreidimensionale Konturierung der äußeren und/oder der inneren Kranzoberfläche lässt im Stand der Technik vorherrschende Symmetrieeinschränkungen in der Gestaltung der Kranzoberfläche hinter sich. Hierdurch ergeben sich neue Freiheitsgrade in der Gestaltung der Kranzoberfläche, die es erlauben, die Strömung im Schaufelkanal günstig zu beeinflussen, insbesondere die Strömungsbedingungen an den Wänden des Schaufelkanals bzw. des Ringraums positiv zu beeinflussen. So können mittels der erfindungsgemäßen Lösung Randverluste verringert, die Schaufelumlenkung im Randbereich erhöht und der Wirkungsgrad gesteigert werden. Die Gefahr einer Strömungsablösung an den Schaufeln (sogenannte Blockage") wird reduziert.

Damit ermöglicht es die erfindungsgemäße Lösung in einer Ausgestaltung, bei gleicher Verdichterauslegung die Anzahl der Statorschaufeln um etwa 15% und die Anzahl der Rotorschaufeln um etwa 5% zu reduzieren. Bei gleichen Umlenkverlusten kann der Wirkungsgrad um bis zu 1% gesteigert werden. Die reduzierte Schaufelanzahl führt dabei zu einem geringeren Gewicht und reduzierten Kosten. Auch geht die Sensitivität der Leckageverluste bei einer Dichtspaltänderung zurück.

Der erfindungsgemäße Stator kann dabei ohne Mehrkosten hergestellt werden, insbesondere dann, wenn die jeweiligen Kranzoberflächen durch spanende Techniken gefertigt sind. So kann die Kranzoberfläche für diesen Fall ohne fertigungstechnischen Mehraufwand eine dreidimensionale Konturierung erfahren.

Es wird darauf hingewiesen, dass die dreidimensionale Konturierung der jeweiligen Kranzoberfläche im Bereich einer Leitschaufel naturgemäß unterbrochen ist, da in diesem Bereich die Leitschaufel angeordnet ist. Der Übergang zwischen der Kranzoberfläche und einer Leitschaufel kann dabei im mathematischen Sinne unstetig (als Kante) oder stetig (unter Realisierung eines Ausrundungsradius) ausgebildet sein. Eventuell vorhandene Übergangsbereiche, die einen Ausrundungsradius zwischen der Kranzoberfläche und der Leitschaufel realisieren, stellen dabei im Sinne der vorliegenden Erfindung einen Teilbereich der Leitschaufel dar, und nicht einen Teilbereich der Kranzoberfläche. Da solche Übergangsbereiche einen definierten Ausrundungsradius aufweisen, sind sie eindeutig von der Kranzoberfläche unterscheidbar. Als Kranzoberfläche im Sinne der vorliegenden Erfindung werden somit Oberflächenbereiche eines Schaufelkranzes axial vor und/oder axial hinter und/oder in Umfangsrichtung zwischen den Leitschaufeln bezeichnet, nicht jedoch die Leitschaufeln selbst und Übergangsbereiche zu den Leitschaufeln.

Weiter wird vorsorglich darauf hingewiesen, dass die erfindungsgemäße Änderung des Radius sowohl in axialer Richtung als auch in Umfangsrichtung derart stark ausgebildet ist, dass sie außerhalb des Toleranzbereiches einer Oberflächenbearbeitung liegt. Die erfindungsgemäße Konturierung stellt eine strömungsbeeinflussende dreidimensionale Konturierung der äußeren und/oder der inneren Kranzoberfläche bereit.

Im folgenden werden jeweils der radial außen liegende Schaufelkranz und/oder der radial innen liegende Schaufelkranz sowie deren äußere Kranzoberfläche und/oder innere Kranzoberfläche betrachtet. Sofern die Beschreibung zwischen diesen Schaufelkränzen und Kranzoberflächen nicht differenziert, gilt die jeweilige Aussage für beide Schaufelkränze und Kranzoberflächen.

In einer Ausgestaltung der Erfindung ist vorgesehen, dass für zumindest einen Schnitt durch den Schaufelkranz in einer Ebene senkrecht zur Mittelachse des Stators gilt, dass die resultierende Oberflächenlinie zwischen zwei Leitschaufeln zumindest abschnittsweise einen sich stetig verändernden Radius aufweist. Wenn man ein Zylinderkoordinatensystem betrachtet mit den drei Koordinaten a) Umfangswinkel (Φ), b) Abstand (r) von der Drehachse und c) Koordinate in axialer Richtung (x), so entspricht ein Schnitt durch den Schaufelkranz in einer Ebene senkrecht zur Mittelachse einem Schnitt durch die Kranzoberfläche bei einem festen axialen Wert (x). Bei der genannten Erfindungsvariante gilt mit anderen Worten, dass sich bei der Oberflächenlinie der Radius (r) zwischen zwei Leitschaufeln in Abhängigkeit von Umfangswinkel (Φ) stetig ändert. Ein solcher Verlauf in Umfangsrichtung gilt für zumindest einige axiale Werte (x) und in einer Ausgestaltung für alle axialen Werte (x), also für die gesamte Kranzoberfläche.

In einer weiteren Ausgestaltung der Erfindung ist vorgesehen, dass für zumindest einen Schnitt durch den Schaufelkranz in einer Ebene senkrecht zur Mittelachse des Stators gilt, dass die resultierende Oberflächenlinie im Bereich zwischen zwei Leitschaufeln asymmetrisch ist. Ein symmetrischer Verlauf in Umfangsrichtung zwischen zwei Leitschaufeln wird bei dieser Ausführungsvariante aufgegeben, mit der Folge einer größeren Designfreiheit. Dass das genannte Merkmal für zumindest einen Schnitt gelten soll, bedeutet dabei, dass es für einen der möglichen Schnitte, eine Minderzahl der möglichen Schnitte, eine Mehrzahl der möglichen Schnitte oder alle Schnitte gilt, wobei angenommen wird, dass zwei Schnitte identisch sind, solange sie nicht einen Mindestabstand zueinander aufweisen.

In einer Ausführungsvariante hierzu ist vorgesehen, dass die Kranzoberfläche angrenzend an die Saugseite der einen Leitschaufel höhere Radien aufweist als angrenzend an die Druckseite der anderen, benachbarten Leitschaufel. An der Saugseite ist somit eine konvexe Erhöhung bzw. ein Berg realisiert, während an der Druckseite eine konvexe Vertiefung bzw. ein Tal realisiert ist. Hierdurch kann in einer Ausführungsvariante erreicht werden, dass Spannungen auf der Druckseite und der Saugseite gleichmäßiger verteilt werden.

In einer weiteren Ausführungsvariante ist vorgesehen, dass für zumindest einen Schnitt durch den Schaufelkranz in einer Ebene senkrecht zur Mittelachse des Stators gilt, dass die resultierende Oberflächenlinie zwischen zwei Leitschaufeln in zumindest einem Abschnitt konvex gewölbt ist. Es ist somit zumindest in einem Teilbereich der Kranzoberfläche ein Berg zwischen zwei benachbarten Leitschaufeln gebildet.

Eine Variation des Radius der Kranzoberfläche findet erfindungsgemäß auch in axialer Richtung statt. Im Folgenden werden einige Ausführungsbeispiele für eine entsprechende Oberflächenkonturierung in axialer Richtung betrachtet. Dabei wird jeweils ein Längsschnitt durch den Schaufelkranz und die dabei entstehende Oberflächenlinie zwischen einer axial vorderen Stirnseite und einer axial hinteren Stirnseite des Schaufelkranzes betrachtet. Ein solcher Längsschnitt entspricht bei einer Betrachtung in Zylinderkoordinaten einem Schnitt bei konstantem oder im wesentlichen konstanten Umfangswinkel (Φ). Die axial vordere Stirnseite kann auch als Schaufelvorderkante und die axial hintere Stirnseite als Schaufelhinterkante des Schaufelkranzes bezeichnet werden. Die Begriffe "vordere" und "hintere" beziehen sich auf die Strömungsrichtung.

Erfindungsgemäß ist vorgesehen, dass die resultierende Oberflächenlinie zwischen einer vorderen Stirnseite und einer axial hinteren Stirnseite zumindest abschnittsweise einen sich stetig verändernden Radius aufweist.

Dabei ist vorgesehen, dass die resultierende Oberflächenlinie zwischen einer vorderen Stirnseite und einer axial hinteren Stirnseite in zumindest einem Abschnitt konvex gewölbt, also als Berg ausgeführt ist. Es ist weiterhin vorgesehen, dass die Oberflächenlinie in Richtung der Schaufelhinterkante zunächst ein Minimum und anschließend einen Maximum durchläuft, wobei die Oberflächenlinie bezogen auf einen Durchschnittsradius des Schaufelkranzes zunächst Werte unterhalb des Durchschnittsradius und dann oberhalb des Durchschnittsradius annimmt. Für die Kranzoberfläche bedeutet dies, dass diese in Richtung der Schaufelhinterkante zunächst ein Tal und anschließend einen Berg durchläuft. Hierdurch wird der Gasstrom in günstiger Weise in den Schaufelkanal hinein eingeleitet.

Die erfindungsgemäße dreidimensionale Gestaltung, die auf Symmetrien im Bereich der Oberflächengestaltung zwischen zwei Leitschaufeln verzichtet, erlaubt grundsätzlich eine beliebig große Anzahl an Freiheitsgraden für die Oberflächengestaltung. In einer Ausgestaltung der Erfindung ist vorgesehen, dass diese große Anzahl reduziert wird, indem eine erste Oberflächenlinie eines ersten Schnitts durch den Schaufelkranz in einer Ebene senkrecht zur Mittelachse des Stators einer Sinusfunktion, einer Kosinusfunktion, oder einer Kombination von Sinus- und Kosinusfunktionen gehorcht. Mindestens eine zweite Oberflächenlinie eines zum ersten Schnitt benachbarten zweiten Schnitts durch den Schaufelkranz gehorcht der gleichen Funktion, wobei jedoch eine andere Phasenlage gegenüber der ersten Oberflächenlinie vorgesehen ist.

Mit anderen Worten weist jeder Schnitt durch die Kranzoberfläche, der in einer Ebene senkrecht zur Mittelachse liegt, eine Oberflächenlinie auf, die durch eine oder mehrere Sinus- oder Kosinusfunktionen oder deren Kombination definiert wird. Bei Schnitten durch die Kranzoberfläche, die bei anderen axialen Werten (x) erfolgen, liegen die gleichen trigonometrischen Funktionen vor. Lediglich die Phasenlage und/oder die Amplitude wird in Abhängigkeit von der axialen Position (x) variiert. Hierdurch wird die Anzahl der Freiheitsgrade verringert, in einer Ausgestaltung auf 2 bis 5. Dies erlaubt beispielsweise eine vergleichsweise einfachere Programmierung einer Zerspanungsmaschine, mit deren Hilfe eine Kranzoberfläche hergestellt wird.

Gemäß einer weiteren Ausführungsvariante ist die Kranzoberfläche an der axial vorderen und/oder der axial hinteren Stirnseite des Schaufelkranzes durchgehend kreisförmig ausgebildet. An der Eintrittsseite und/oder der Austrittsseite des Schaufelkranzes wird ein kreisförmiger Rand mit festem Radius bereitgestellt. Die dreidimensionale Konturierung flacht sich dementsprechend zu den Stirnseiten des Schaufelkranzes hin aus. Hierdurch wird ein verlustfreier Übergang von einer Schaufelreihe zu einer angrenzenden Schaufelreihe bereitgestellt.

Es ist in einer Ausgestaltung der Erfindung vorgesehen, dass die Kranzoberfläche zwischen sämtlichen Leitschaufeln des Stators jeweils die gleiche dreidimensionale Form aufweist. Die Anordnung ist symmetrisch in Bezug auf eine Drehung um einen Winkel, der dem Abstand zwischen zwei Leitschaufeln entspricht.

Die Erfindung wird nachfolgend unter Bezugnahme auf die Figuren der Zeichnung anhand mehrerer Ausführungsbeispiele näher erläutert. Es zeigen:
- Figur 1: einen Längsschnitt durch ein Ausführungsbeispiel eines Verdichters eines Strahltriebwerks, wobei dreidimensional konturierte Oberflächen zum einen an einem Rotor und zum anderen an einem Stator des Verdichters dargestellt sind;
- Figur 2: eine Draufsicht in radialer Richtung auf einen Teilbereich eines Stators, der einen inneren Schaufelkranz mit einer dreidimensional konturierten inneren Kranzoberfläche aufweist;
- Figur 3A: schematisch eine Ansicht in Strömungsrichtung auf einen Schnitt quer zur Mittelachse durch einen Stator mit einer dreidimensionalen konturierten Kranzoberfläche, wobei die Radiusvariation der Kranzoberfläche dargestellt ist;
- Figur 3B: schematisch einen Längsschnitt durch einen Schaufelkranz eines Stators mit einer dreidimensional konturierten Kranzoberfläche;
- Figur 4: ein Diagramm, das den Druckverlustbeiwert in Abhängigkeit von der Ringraumhöhe bei einem Stator mit dreidimensional konturierter Oberfläche im Vergleich zu einem konventionell ausgeführten Stator zeigt; und
- Figur 5: ein Diagramm, das zum einen das Gesamtdruckverhältnis und zum anderen den adiabatischen Wirkungsgrad in Abhängigkeit vom reduzierten Massenstrom für einen erfindungsgemäß ausgeführten Stator im Vergleich zu einem konventionell ausgeführten Stator angibt.

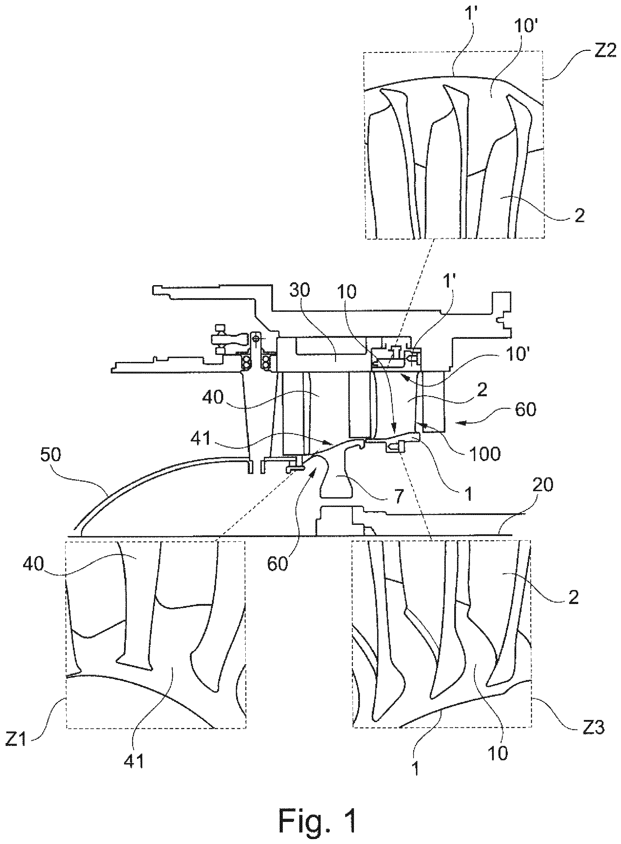

Die Figur 1 zeigt in Schnittansicht den Anfangsbereich eines Ausführungsbeispiels eines Strahltriebwerks, wobei ein Einlaufkonus 50 mit einer Reihe von Eintrittsleitschaufeln und ein sich daran anschließender Verdichter 60 dargestellt sind. Der Verdichter 60 umfasst Rotoren und Statoren, wobei die Rotoren sich um eine zentrale Drehachse 20 drehen. Die zentrale Drehachse 20 stellt gleichzeitig eine Mittelachse 20 und Symmetrieachse für die Statoren dar.

Es ist ein Stator 100 dargestellt, der einen radial innen liegenden Schaufelkranz 1 und einen radial außen liegenden Schaufelkranz 1' aufweist. Zwischen dem radial innen liegenden Schaufelkranz 1 und dem radial außen liegenden Schaufelkranz 1' erstrecken sich Leitschaufeln 2. Der Bereich zwischen dem radial innen liegenden Schaufelkranz 1 und dem radial außen liegenden Schaufelkranz 1' ist dabei Teil eines Ringraums des Stators 100 und des Verdichters 60.

Der radial innen liegende Schaufelkranz 1 bildet eine innere Kranzoberfläche 10 aus, die bezogen auf den radial innen liegenden Schaufelkranz 1 radial außen ausgebildet ist. Ebenso bildet der radial außen liegende Schaufelkranz 1' eine äußere Kranzoberfläche 10' aus, die bezogen auf den außen liegenden Schaufelkranz 1' radial innen ausgebildet ist.

Es bilden jeweils zwei benachbarte Leitschaufeln 2, die innere Kranzoberfläche 10 und die äußere Kranzoberfläche 10' einen Schaufelkanal des Stators 100. Der Schaufelkanal bildet einen Teil des Ringraums.

Es ist vorgesehen, dass zumindest einige der Statoren dreidimensional konturierte Oberflächen ausbilden, die den Leitschaufelkanal radial innen und/oder radial außen begrenzen. So ist im Ausführungsbeispiel der Figur 1 sowohl an der inneren Kranzoberfläche 10 als auch an der äußeren Kranzoberfläche 10' eine dreidimensionale Strukturierung erfolgt, die sowohl in axialer Richtung als auch in Umfangsrichtung sich verändernde Radien aufweist. Eine solche dreidimensionale Konturierung kann sowohl an der radial innen liegenden Kranzoberfläche 10 als auch der radial außen liegenden Kranzoberfläche 10' vorliegen, oder nur an einer dieser Kranzoberflächen 10, 10'. Die Detaildarstellungen Z2 und Z3 der Figur 1 zeigen jeweils die dreidimensional konturierten Oberflächen 10, 10' am radial innen liegenden Schaufelkranz 1 und am radial außen liegenden Schaufelkranz 1' sowie die Leitschaufeln 2.

Der radial außen liegende Schaufelkranz 1' wird durch einen äußeren Leitschaufelträger gebildet, der Teil eines äußeren Gehäuses 30 des Verdichters 60 ist. Der radial innen liegende Schaufelkranz 1 wird durch einen inneren, nabenseitigen Leitschaufelträger gebildet. Dabei kann optional vorgesehen sein, dass zusätzlich eine Verstelleinrichtung (nicht dargestellt) vorgesehen ist, mittels derer die Leitschaufeln 2 hinsichtlich ihrer Ausrichtung verstellbar sind.

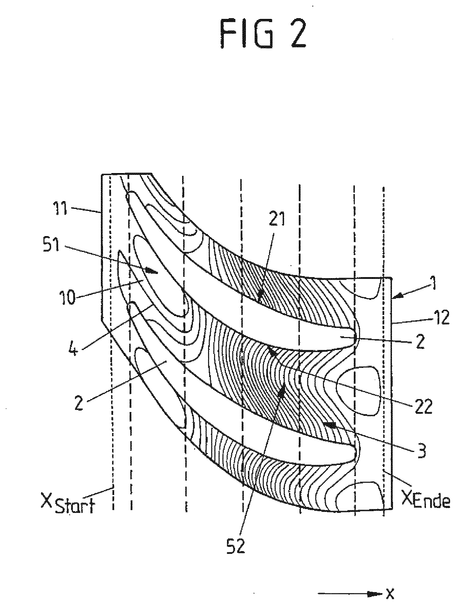

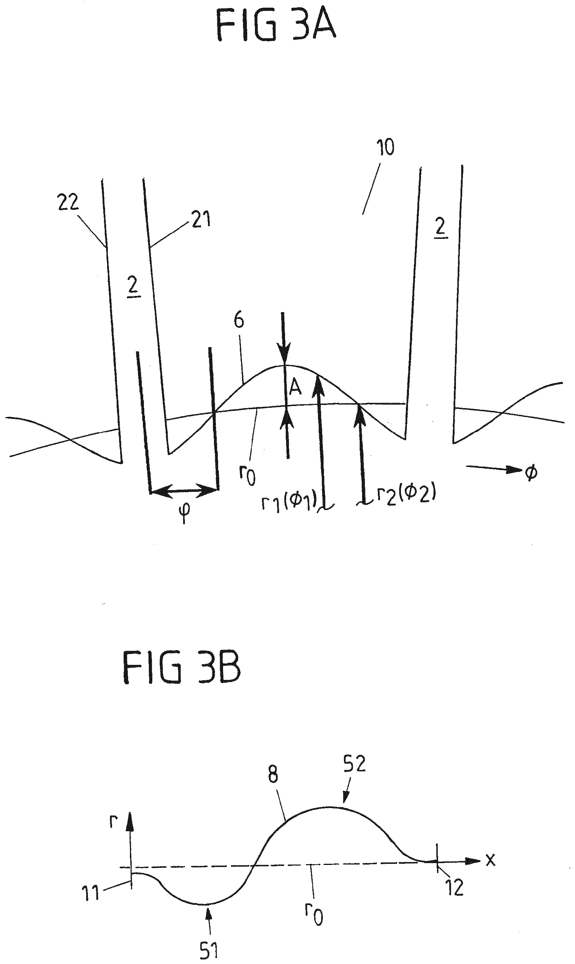

In der Figur 1 ist des Weiteren ein Rotor 60 dargestellt, der einen als Scheibe 7 ausgebildeten Drehkörper mit einem Schaufelkranz und daran angeordneten Laufschaufeln 40 aufweist. Der Schaufelkranz weist eine Kranzoberfläche 41 auf, die ebenso wie die Kranzoberflächen 10, 10' des Stators 100 dreidimensional konturiert ist, wobei gilt, dass die Kranzoberfläche 41 sowohl in axialer Richtung als auch in Umfangsrichtung sich verändernde Radien aufweist. Die in Bezug auf die Figuren 2, 3A und 3B weiter unten beschriebene Formgebung kann ebenfalls an der Kranzoberfläche 41 des Rotors 60 realisiert sein. Für diesen Fall sind sowohl Rotor als auch Stator einer Axialverdichterstufe mit dreidimensional konturierten Kranzoberflächen ausgebildet.

Die Detailansicht Z1 der Figur 1 zeigt in perspektivischer Ansicht den Schaufelkranz des Rotors mit der dreidimensional konturierten Kranzoberfläche 41 und den Laufschaufeln 40. Dabei wird darauf hingewiesen, dass die Vornahme einer dreidimensionalen Konturierung an der Kranzoberfläche eines Rotors 60 lediglich optional ist.

Anhand der Figuren 2, 3A und 3B werden im folgenden Ausführungsbeispiele einer dreidimensionalen Konturierung der inneren Kranzoberfläche 10 des radial innen liegenden Schaufelkranzes 1 des Stators 100 erläutert. Dabei wird darauf hingewiesen, dass die Konturierung der äußeren Kranzoberfläche 10' in entsprechender oder ähnlicher Weise erfolgen kann. Die folgenden Ausführungen in Bezug auf die Figuren 2, 3A und 3B gelten somit in entsprechender Weise für die äußere Kranzoberfläche 10' des radial außen liegenden Schaufelkranzes 1'.

Die Figur 2 zeigt eine Draufsicht auf einen Teilbereich eines inneren Schaufelkranzes 1 eines Stators, der in die Zeichenebene abgewickelt ist. Der Schaufelkranz 1 weist eine axial vordere Stirnseite 11 und eine axial hintere Stirnseite 12 auf, zwischen denen sich eine radial außen liegende Oberfläche des inneren Schaufelkranzes 1 erstreckt, die nachfolgend als innere Kranzoberfläche 10 oder einfach Kranzoberfläche 10 bezeichnet wird. Mit dem inneren Schaufelkranz 1 sind mehrere Leitschaufeln 2 verbunden. Zwei benachbarte Leitschaufeln 2 bilden zwischen sich einen Schaufelkanal 3 aus, der einen Teil eines Ringraums bildet, der zwischen dem inneren Schaufelkranz 1 und einem äußeren Schaufelkranz 1' (vgl. Figur 1) ausgebildet ist.

Jede Leitschaufel 2 weist eine Saugseite 21 und eine Druckseite 22 auf. Der Schaufelkanal 3 zwischen zwei Leitschaufeln 2 wird seitlich begrenzt durch die Saugseite 21 der einen Leitschaufel 2 und die Druckseite 22 der anderen Leitschaufel 2. In radialer Richtung wird der Schaufelkanal 3 radial innen durch die Kranzoberfläche 10 und radial außen durch die Oberfläche eines äußeren Schaufelkranzes begrenzt, entsprechend der Oberfläche 10' der Figur 1.

Die Kranzoberfläche 10 ist dreidimensional konturiert ist, d. h. sie weist sich verändernde Radien sowohl in axialer als auch in Umfangsrichtung auf. Die Radiusänderung ist stetig im mathematischen Sinne, d. h. sie weist keine Sprungstellen auf. Die dreidimensionale Konturierung ist durch in der Figur 2 dargestellte Höhenlinien 4 angegeben, wobei die jeweiligen Höhenlinien Linien mit konstantem Radius angeben. Der Radius bezieht sich auf den radialen Abstand zur Mittelachse 20 des Stators (vgl. Figur 1).

Aus der Darstellung der Höhenlinien 4 ergibt sich, dass die Kranzoberfläche in axialer Richtung x (und dabei der Wölbung der Leitschaufeln 2 folgend) zunächst eine konkave Vertiefung bzw. ein Tal 51 und anschließend eine konvexe Erhebung bzw. einen Berg 52 durchläuft. Auch ist zu erkennen, dass die Konturierung in Umfangsrichtung zwischen zwei Leitschaufeln 2 nicht symmetrisch ist. Insbesondere befindet sich der Berg 52 näher an der Druckseite 22 der jeweiligen Leitschaufel 2 als an der Saugseite 21.

Die Konturierung mit einer konkaven Vertiefung 51 am Anfang des durch jeweils zwei Leitschaufeln 2 gebildeten Schaufelkanals 3 und einer konvexen Erhebung 52, die sich in axialer Richtung hinter der Vertiefung 51 befindet, verbessert die Strömung im Schaufelkanal, da die einströmende Luft mittels der Vertiefung 51 am Anfang des Schaufelkanals verlustarm in diesen einströmen kann. Die verbesserte Aerodynamik erlaubt es, Strömungsverluste an den Randbereichen des Schaufelkanals 3 und die Gefahr einer Blockage zu reduzieren.

Weiter ist in der Figur 2 zu erkennen, dass die dreidimensionale Konturierung der Kranzoberfläche 10 nicht bereits an den Stirnseiten 11, 12 des Schaufelkranzes 1 beginnt. An den Stirnseiten 11, 12 ist der Schaufelkranz 1 kreisförmig ausgebildet, so dass an der Eintrittsseite und an der Austrittseite ein rotationssymmetrischer Rand mit festem Radius bereitgestellt wird. Die dreidimensionale Konturierung beginnt erst ab einem axialen Wert x_{Start} (angedeutet durch eine gepunktete Linie), und sie endet bei einem axialen Wert x_{Ende}. Es wird jedoch darauf hingewiesen, dass in anderen Ausführungsbeispielen vorgesehen sein kann, dass sich die dreidimensionale Konturierung sich bis zu den Stirnseiten 11, 12 hin erstreckt.

Ein kreisförmiger Rand mit konstantem Radius an der axial vorderen Stirnseite 11 und an der axial hinteren Stirnseite 12 ist dabei in einer Ausgestaltung der Erfindung, jedoch nicht notwendigerweise, realisiert, um einen möglichst verlustfreien Übergang von einer Schaufelreihe auf die nächste Schaufelreihe sicherzustellen.

Es wird darauf hingewiesen, dass die in der Figur 2 dargestellte dreidimensionale Konturierung lediglich beispielhaft zu verstehen ist. Durch den Wegfall von im Stand der Technik verlangten Symmetrien in der Gestaltung der Kranzoberfläche ergeben sich Freiheitsgrade in der Gestaltung der Kranzoberfläche, die auch zu anderen Konturierungen führen können. Beispielsweise kann vorgesehen sein, dass die Kranzoberfläche Vertiefungen und Erhöhungen aufweist, die an anderer Stelle, in anderer Größe und in anderer Zahl vorgesehen sind. Das Weiteren wird darauf hingewiesen, dass eine dreidimensionale Konturierung auch durch eine Rampenfunktion realisiert sein kann, die keine Minima und Maxima aufweist. Bei einer Rampenfunktion nimmt der Radius in axialer Richtung linear oder im wesentlichen linear zu. Auch kann vorgesehen sein, dass eine solche Rampenfunktion einer komplexeren dreidimensionalen Konturierung überlagert ist.

Die Figur 3A zeigt schematisch anhand einer Schnittansicht, die quer zur Mittelachse des Stators verläuft, ein Ausführungsbeispiel einer dreidimensionalen Konturierung einer Kranzoberfläche. Es sind zwei Leitschaufeln 2 mit jeweils einer Saugseite 21 und der Druckseite 22 zu erkennen. Zwischen diesen ist die Oberfläche 10 des Schaufelkranzes 1 konturiert. Der dargestellte Schnitt resultiert in einer Oberflächenlinie 6, die die Variation des Radius r in Umfangsrichtung Φ angibt. Die Darstellung erfolgt dabei im Zylinderkoordinatensystem, wobei der Umfangswinkel Φ und der Abstand r von der (nicht dargestellten) Drehachse des Stators angegeben sind. Der Radius r weist einen Mittelwert r₀ auf, um den herum der aktuelle Radius r in Abhängigkeit vom Umfangswinkel Φ variiert. Die Figur 3A zeigt dabei zwei beispielhafte Radien r₁, r₂ bei Umfangswinkeln Φ₁ und Φ₂.

Im dargestellten Ausführungsbeispiel folgt die Oberflächenlinie 6 einer Sinus- oder einer Kosinusfunktion. Diese zeichnet sich durch eine Periodenlänge, eine Phasenlage ϕ und eine Amplitude A, die sich auf den Durchschnittsradius r₀ bezieht, aus. Dabei gilt, dass der Radius r Werte zwischen r₀ + A und r₀ - A annehmen kann und zwischen diesen Werten variiert. Die Periodenlänge ist so gewählt, dass sie gleich der Leitschaufelteilung ist. Der Winkel ϕ gibt die Phasenlage der trigonometrischen Funktion 6 an.

Statt einer einzelnen Sinus- oder Kosinusfunktion, wie sie in der Funktion 3A dargestellt ist, kann auch eine Kombination von Sinus- und Kosinusfunktionen verwendet werden, die jeweils eine bestimmte Periodenlänge, eine bestimmte Amplitude und eine bestimmte Phasenlage aufweisen. Die Periodenlänge ist dabei in einer Ausführungsvariante bei allen kombinierten Funktionen identisch und entspricht der Leitschaufelteilung.

Eine Modellierung der dreidimensionalen Fläche 10 mittels trigonometrischer Funktionen erlaubt es, in einfacher Weise, nämlich unter Verwendung weniger Parameter die Oberfläche 10 zu konstruieren. Dies ist insbesondere vorteilhaft bei der Programmierung einer Zerspanungsmaschine, mit deren Hilfe die Kranzoberfläche 10 konturiert wird.

In einer Ausgestaltung ist vorgesehen, dass die gesamte Kranzoberfläche 10 oder zumindest ein Teilbereich mittels der gleichen trigonometrischen Funktionen, im Ausführungsbeispiel der Figur 3 der trigonometrischen Funktion 6 aufgebaut wird. Hierzu ist vorgesehen, dass lediglich die Phasenlage ϕ und/oder die Amplitude A in Abhängigkeit vom axialen Abstand x variiert wird. Damit liegt bei allen Schnitten durch die Kranzoberfläche 10 bei unterschiedlichen axialen Werten von x die gleiche trigonometrische Funktion 6 bzw. die gleiche Kombination trigonometrischer Funktionen vor. Es ist lediglich die Phasenlage ϕ und/oder die Amplitude A vom axialen Wert x abhängig.

Es wird angemerkt, dass durch eine graduelle Reduzierung der Amplitude A zu den axialen Stirnseiten 11, 12 hin in einfacher Weise eine Kreisform an den Stirnseiten 11, 12 erreicht werden kann.

In einer Ausführungsvariante kann vorgesehen sein, dass der Amplitude A linear abhängig von dem axialen Wert x zusätzlich ein Betrag aufaddiert wird, beispielsweise um eine dreidimensionale Konturierung in Verbindung mit einer aufsteigenden Rampe in Richtung der hinteren Stirnseite 12 zu realisieren.

Die Verwendung von Sinus- und Kosinusfunktionen oder deren Kombination erlaubt in einfacher Weise eine Parametrisierung der dreidimensionalen Form der Kranzoberfläche 10. Die Parameter, mit deren Hilfe die dreidimensionale Form der Kranzoberfläche 10 mathematisch beschrieben werden kann, sind auf eine geringe Anzahl verringert. Dies entspricht einer Reduktion der verfügbaren Freiheitsgrade. Dabei kann mit der beschriebenen Parametrisierung bereits eine sehr gute Auslegung der Wandflächen erfolgen. In einer Ausgestaltung liegt die Anzahl der Parameter bzw. Freiheitsgrade bei zwei bis fünf.

Die Figur 3B zeigt schematisch und beispielhaft einen Längsschnitt durch einen dreidimensional konturierten Schaufelkranz 1. Die dabei resultierende Oberflächenlinie 8 gibt den Radius r, d.h. den Abstand von der Mittelachse 20, in Abhängigkeit vom axialen Wert x an. Die Darstellung erfolgt wieder unter Verwendung von Zylinderkoordinaten, nämlich der Zylinderkoordinaten r und x.

Dabei ist erkennbar, dass die Oberflächenlinie 8 zunächst Werte unterhalb des Durchschnittsradius r₀ aufweist. Dies entspricht einem in der Figur 2 dargestellten Tal 51. Im weiteren Verlauf nimmt die Oberflächenlinie 8 Werte oberhalb des Durchschnittsradius r₀ an. Dies entspricht einem in der Figur 2 dargestellten Berg 52. Die Form der Oberflächenlinie 8 ergibt sich bei der in Bezug auf die Figur 3A erläuterten Parametrisierung aus den Werten für A und ϕ in Abhängigkeit von x.

Die in den Figuren 3A und 3B angegebenen Schnitte definieren beispielhaft dreidimensionale Strukturierungen, die einen sich stetig verändernden Radius in Umfangsrichtung und in axialer Richtung definieren. Die in den Schnittdarstellungen der Figuren 3A, 3B definierten Oberflächenlinien 6, 8, und damit die Kranzoberfläche 10 insgesamt, können dabei asymmetrisch in Bezug auf die Anordnung jeweils zweier benachbarter Leitschaufeln 2 ausgebildet sein. In Ausführungsbeispielen ist der Verlauf der Kranzoberfläche zumindest in Teilbereichen sowohl in Umfangsrichtung als auch in axialer Richtung asymmetrisch. Auch ist in einem Ausführungsbeispiel vorgesehen, dass die dreidimensionale Oberflächenstrukturierung derart ist, dass die Kranzoberfläche 10 im Bereich zwischen zwei Laufrädern 2 mindestens eine konvexe Erhebung ausbildet. Dies kann allein oder in Kombination mit einer oder mehreren konkaven Vertiefungen realisiert sein.

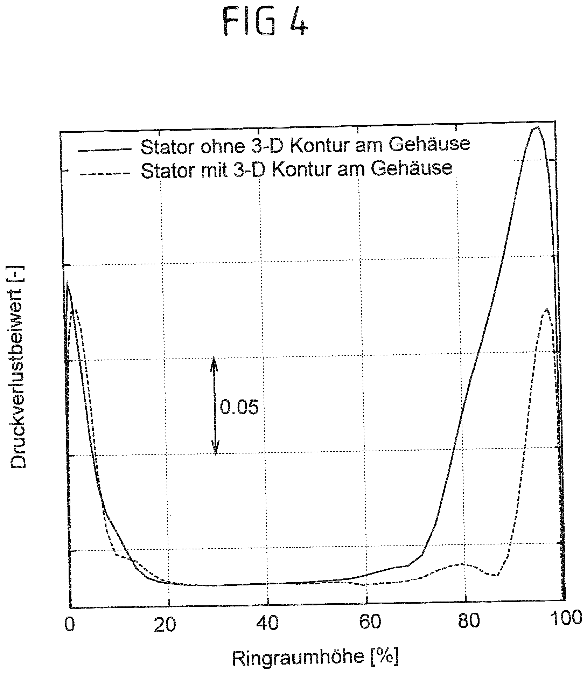

Die Figur 4 zeigt ein Diagramm, das den Druckverlustbeiwert ("pressure loss coefficient") in Abhängigkeit von der Ringraumhöhe ("duct height") angibt. Die durchgezogene Linie gibt dabei die Werte für einen konventionellen Stator und die gestrichelte Linie die Werte für einen erfindungsgemäßen Stator mit einer dreidimensionalen Konturierung der Kranzflächen an, wie sie beispielhaft anhand der Figuren 2, 3A, 3B beschrieben wurde.

Es ergibt sich, dass bei einer geringen und bei einer hohen Ringraumhöhe, also angrenzend an die jeweilige Kranzoberfläche, deutliche Unterschiede im Druckverlustbeiwert vorliegen, insbesondere angrenzend an den radial außen liegenden Schaufelkranz. Die Unterschiede sind signifikant. Der Druckverlustbeiwert gibt den Druckverlust an, der bei Strömen von Gas durch den Leitschaufelkanal auftritt. Der Druckverlust geht mit einem Energieverlust einher. Ein solcher Energie- und Druckverlust wird unter anderem durch Reibung zwischen dem Gas und den Umfangswänden und damit verbundenen Turbulenzen verursacht. Die Figur 4 zeigt, dass durch die erfindungsgemäße dreidimensionale Strukturierung der Kranzflächen bzw. des Statorgehäuses der Energie- und Druckverlust reduziert werden kann.

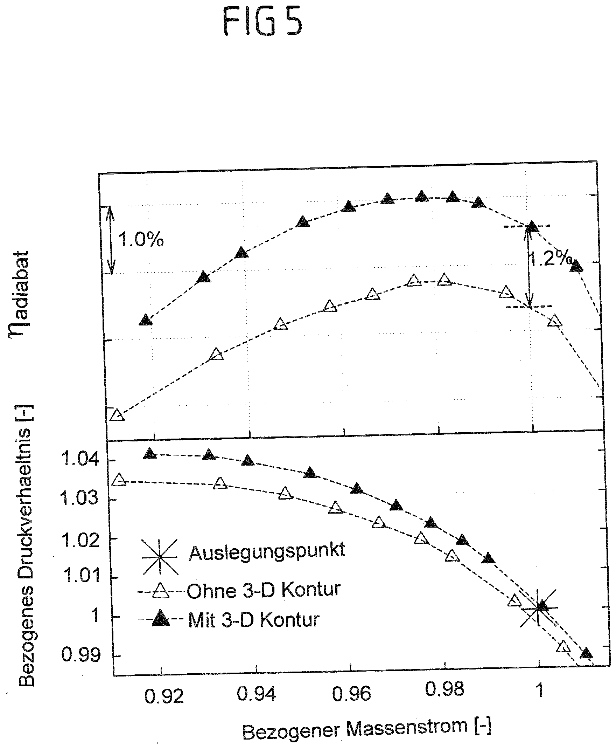

Die Figur 5 zeigt ein Diagramm, das zum einen das bezogene Druckverhältnis und zum anderen den adiabatischen Wirkungsgrad η ("adiabatic efficiency") in Abhängigkeit vom bezogenen Massenstrom angibt. Das bezogene Druckverhältnis ist das Gesamtdruckverhältnis ("overall pressure ratio") geteilt durch eine Referenzgröße, die durch den Auslegungspunkt festgelegt wird. Der bezogene Massenstrom ist der reduzierte Massenstrom ("inlet mass flow function") geteilt durch eine Referenzgröße, die ebenfalls durch den Auslegungspunkt festgelegt wird. Hierdurch ergeben sich für das Druckverhältnis und den Massenstrom dimensionslose Größen.

In den Graphen geben die nicht ausgefüllten Dreiecke Messwerte für einen Stator an, der nicht mit einer dreidimensionalen Konturierung versehen ist. Die ausgefüllten Dreiecke geben Messwerte für einen Stator an, der Kranzoberflächen mit einer dreidimensionalen Konturierung aufweist.

Es ist zu erkennen, dass der adiabatische Wirkungsgrad bei einer erfindungsgemäßen dreidimensionalen Konturierung der Kranzoberflächen deutlich erhöht wird. Die Erhöhung des Wirkungsgrades liegt bei 1,20 %.

Auch der Verlauf des bezogenen Druckverhältnisses verdeutlicht die Vorteile der erfindungsgemäßen Lehre. Das bezogene Druckverhältnis gibt in der Figur 5 das Druckverhältnis vor und hinter einer Verdichterstufe an, die den betrachteten Stator umfasst. Ein höheres Druckverhältnis bedeutet einen höheren Wirkungsgrad. Auch hier weisen die erfindungsgemäß ausgebildeten Statoren ein besseres Verhältnis auf.

Die Erfindung beschränkt sich in ihrer Ausgestaltung nicht auf die vorstehend dargestellten Ausführungsbeispiele, die lediglich beispielhaft zu verstehen sind. Insbesondere sind die dargestellten Formen der dreidimensionalen Konturierung, des inneren und äußeren Schaufelkranzes und der Leitschaufeln lediglich beispielhaft zu verstehen. Auch wird darauf hingewiesen, dass eine dreidimensionale Konturierung nicht im gesamten Bereich zwischen zwei Leitschaufeln ausgebildet sein muss, sondern auch lediglich in Teilbereichen ausgebildet sein kann. Der Einsatz eines erfindungsgemäßen Stators ist im Übrigen nicht auf ein Strahltriebwerk beschränkt. Dieser kann auch in Axialverdichterstufen anderer Turbomaschinen eingesetzt werden.

## Patentansprüche

1. Stator einer Axialverdichterstufe einer Turbomaschine, der aufweist:
- einen radial außen liegenden Schaufelkranz (1'), der eine äußere Kranzoberfläche (10') ausbildet,
- einen radial innen liegenden Schaufelkranz (1), der eine innere Kranzoberfläche (10) ausbildet, und
- mehrere Leitschaufeln (2), die mit den Schaufelkränzen (1, 1') verbunden sind, wobei die äußere Kranzoberfläche (10') und/oder die innere Kranzoberfläche (10) zumindest in einem Teilbereich sowohl in axialer Richtung (x) als auch in Umfangsrichtung (Φ) einen sich verändernden Radius (r) bezogen auf eine Mittelachse (20) des Stators aufweisen,
wobei für zumindest einen Längsschnitt durch den radial außen liegenden Schaufelkranz (1') und/oder den radial innen liegenden Schaufelkranz (1) gilt, dass eine resultierende Oberflächenlinie (8) zwischen einem axial vorderen Startwert (x_{Start}) und einem axial hinteren Endwert (x_{Ende}) einen sich stetig verändernden Radius aufweist, wobei der axial vordere Startwert (x_{Start}) - in axialer Richtung betrachtet - vor den Vorderkanten der Leitschaufeln (2) und der axial hintere Endwert (x_{Ende}) - in axialer Richtung betrachtet - hinter den Hinterkanten der Leitschaufeln (2) liegt, und die Kranzoberfläche (10, 10') mit der resultierenden Oberflächenlinie (8) derart geformt ist, dass sie in Richtung einer axial hinteren Stirnseite (12) des Schaufelkranzes (1, 1') zunächst eine konkave Vertiefung (51) und zu dieser axial beabstandet eine konvexe Erhöhung (52) aufweist, **dadurch gekennzeichnet, dass** die Oberflächenlinie (8) bezogen auf einen Durchschnittsradius (r₀) des Schaufelkranzes (1, 1') zunächst, ausgehend von dem axial vorderen Startwert (x_{Start}), im Bereich der konkaven Vertiefung, ausschließlich Werte unterhalb des Durchschnittsradius (r₀) und dann, im Bereich der konvexen Erhöhung, bis zum axial hinteren Endwert (x_{Ende}), ausschließlich Werte oberhalb des Durchschnittsradius (r₀) annimmt.

2. Stator nach Anspruch 1, **dadurch gekennzeichnet, dass** für zumindest einen Schnitt durch den radial außen liegenden Schaufelkranz (1') und/oder den radial innen liegenden Schaufelkranz (1) in einer Ebene senkrecht zur Mittelachse (20) gilt, dass die resultierende Oberflächenlinie (6) im Bereich zwischen zwei Leitschaufeln (2) zumindest abschnittsweise einen sich stetig verändernden Radius aufweist.

3. Stator nach Anspruch 1 oder 2, **dadurch gekennzeichnet, dass** für zumindest einen Schnitt durch den radial außen liegenden Schaufelkranz (1') und/oder den radial innen liegenden Schaufelkranz (1) in einer Ebene senkrecht zur Mittelachse (20) gilt, dass die resultierende Oberflächenlinie (6) im Bereich zwischen zwei Leitschaufeln (2) asymmetrisch ist.

4. Stator nach Anspruch 3, **dadurch gekennzeichnet, dass** die Kranzoberfläche (10) zwischen zwei benachbarten Leitschaufeln (2) derart ausgebildet ist, dass sie angrenzend an die Saugseite der einen Leitschaufel (2) höhere Radien aufweist als angrenzend an die Druckseite der anderen Leitschaufel (2).

5. Stator nach einem der vorangehenden Ansprüche, **dadurch gekennzeichnet, dass** für zumindest einen Schnitt durch den radial außen liegenden Schaufelkranz (1') und/oder den radial innen liegenden Schaufelkranz (1) in einer Ebene senkrecht zur Mittelachse (20) gilt, dass die resultierende Oberflächenlinie (6) im Bereich zwischen zwei Leitschaufeln (2) in zumindest einem Abschnitt konvex gewölbt ist.

6. Stator nach einem der vorangehenden Ansprüche, **dadurch gekennzeichnet, dass** der axial vordere Startwert (x_{Start}) an der axial vorderen Stirnseite (11) und der axial hintere Endwert (x_{Ende}) an der axial hinteren Stirnseite (12) des Schaufelkranzes (1, 1') liegt.

7. Stator nach einem der vorangehenden Ansprüche, **dadurch gekennzeichnet, dass** für zumindest einen Längsschnitt durch den radial außen liegenden Schaufelkranz (1') und/oder den radial innen liegenden Schaufelkranz (1) gilt, dass die resultierende Oberflächenlinie (8) in zumindest einem Abschnitt konvex gewölbt ist.

8. Stator nach einem der vorangehenden Ansprüche, **dadurch gekennzeichnet, dass** eine erste Oberflächenlinie (6) eines ersten Schnitts durch den radial außen liegenden Schaufelkranz (1') und/oder den radial innen liegenden Schaufelkranz (1) in einer Ebene senkrecht zur Mittelachse (20) einer Sinusfunktion, einer Kosinusfunktion, oder einer Kombination von Sinus- und Kosinusfunktionen gehorcht.

9. Stator nach Anspruch 8, **dadurch gekennzeichnet, dass** mindestens eine zweite Oberflächenlinie (6) eines zum ersten Schnitt benachbarten zweiten Schnitts durch den Schaufelkranz (1, 1') in einer Ebene senkrecht zur Mittelachse (20) der gleichen mathematischen Funktion gehorcht, dabei jedoch eine andere Phasenlage (ϕ) und/oder eine andere Amplitude (A) gegenüber der ersten Oberflächenlinie (6) aufweist.

10. Stator nach Anspruch 8 oder 9, **dadurch gekennzeichnet, dass** der Radiusverlauf der Kranzoberfläche (10, 10') durch Amplitude (A) und/oder Phasenlage (ϕ) einer trigonometrischen Funktion oder mehrerer, einander überlagerter trigonometrischen Funktionen parametrisiert ist, wobei die Werte für Amplitude (A) und/oder Phase (ϕ) vom Umfangswinkel (Φ) und der axialen Position (x) abhängig sind.

11. Stator nach Anspruch 10, **dadurch gekennzeichnet, dass** nicht mehr als 5 trigonometrische Funktionen zur Definition der dreidimensionalen Form der Kranzoberfläche (10, 10') eingesetzt sind.

12. Stator nach einem der vorangehenden Ansprüche, **dadurch gekennzeichnet, dass** die Kranzoberfläche (10, 10) an der axial vorderen und/oder der axial hinteren Stirnseite des radial innen liegenden Schaufelkranzes (1) und/oder des radial außen liegenden Schaufelkranzes kreisförmig ausgebildet ist.

13. Stator nach einem der vorangehenden Ansprüche, **dadurch gekennzeichnet, dass** die innere und/oder äußere Kranzoberfläche (10, 10') zwischen sämtlichen Leitschaufeln (2) des Stators (100) jeweils die gleiche dreidimensionale Form aufweist.

14. Stator nach einem der vorangehenden Ansprüche, **dadurch gekennzeichnet, dass** der radial außen liegende Schaufelkranz (1) Teil eines Verdichtergehäuses (30) ist.

## Claims

1. Stator of an axial compressor stage of a turbomachine, featuring:
- a radially outer blade ring (1') forming an outer ring surface (10'),
- a radially inner blade ring (1) forming an inner ring surface (10), and
- several stator blades (2) connected to the blade rings (1, 1'),
wherein the outer ring surface (10') and/or the inner ring surface (10) have/ has at least in a partial area a changing radius (r) relative to a central axis (20) of the stator both in the axial direction (x) and in the circumferential direction (Φ),
wherein for at least one longitudinal section through the radially outer blade ring (1') and/or the radially inner blade ring (1) a resulting surface line (8) between an axially front start value (xₛₜₐᵣₜ) and an axially rear end value (x_{end}) has a steadily changing radius, wherein the axially front start value (xₛₜₐᵣₜ) - when viewed in the axial direction - is situated in front of the leading edges of the stator blades (2) and the axially rear end value (x_{end}) - when viewed in the axial direction - is situated behind the trailing edges of the stator blades (2), and the ring surface (10, 10') with the resulting surface line (8) is shaped such that it first has in the direction of an axially rear face (12) of the blade ring (1, 1') a concave depression (51) and at a certain axial distance to said depression a convex elevation (52), **characterized in that** the surface line (8) - with reference to an average radius (rₒ) of the blade ring (1, 1'), starting from the axially front start value (xₛₜₐᵣₜ) in the area of the concave depression first assumes exclusively values below the average radius (rₒ), and then in the area of the convex elevation up to the axially rear end value (x_{end}) exclusively values above the average radius (rₒ).

2. Stator in accordance with Claim 1, **characterized in that** for at least one section through the radially outer blade ring (1') and/or the radially inner blade ring (1) in a plane perpendicular to the central axis (20), the resulting surface line (6) in the area between two stator blades (2) has at least in some sections a steadily changing radius.

3. Stator in accordance with Claim 1 or 2, **characterized in that** for at least one section through the radially outer blade ring (1') and/or the radially inner blade ring (1) in a plane perpendicular to the central axis (20), the resulting surface line (6) in the area between two stator blades (2) is asymmetrical.

4. Stator in accordance with Claim 3, **characterized in that** the ring surface (10) between two adjacent stator blades (2) is designed such that adjoining the suction side of the one stator blade (2) it has higher radii than adjoining the pressure side of the other stator blade (2).

5. Stator in accordance with one of the preceding Claims, **characterized in that** for at least one section through the radially outer blade ring (1') and/or the radially inner blade ring (1) in a plane perpendicular to the central axis (20), the resulting surface line (6) in the area between two stator blades (2) in at least one section has a convex bulge.

6. Stator in accordance with one of the preceding Claims, **characterized in that** the axially front start value (xₛₜₐᵣₜ) is positioned at the axially front face (11) and the axially rear end value (x_{end}) is positioned at the axially rear face (12) of the blade ring (1, 1').

7. Stator in accordance with one of the preceding Claims, **characterized in that** for at least one longitudinal section through the radially outer blade ring (1') and/or the radially inner blade ring (1) the resulting surface line (8) in at least one section has a convex bulge.

8. Stator in accordance with one of the preceding Claims, **characterized in that** a first surface line (6) of a first section through the radially outer blade ring (1') and/or the radially inner blade ring (1) in a plane perpendicular to the central axis (20) conforms to a sine function, a cosine function or to a combination of sine and cosine functions.

9. Stator in accordance with Claim 8, **characterized in that** at least one second surface line (6) of a second section through the blade ring (1, 1') adjacent to the first section in a plane perpendicular to the central axis (20) obeys the same mathematical function, with however a different phase position (ϕ) and/or a different amplitude (A) being provided relative to the first surface line (6).

10. Stator in accordance with Claim 8 or 9, **characterized in that** the course of the radius of the ring surface (10, 10') is parameterized by the amplitude (A) and/ or the phase position (ϕ) of a trigonometric function or of several trigonometric functions superimposed one over the other, with the values for amplitude (A) and/or phase (ϕ) depending on the circumferential angle (Φ) and the axial position (x).

11. Stator in accordance with Claim 10, **characterized in that** not more than five trigonometric functions are used for the definition of the three-dimensional contour of the ring surface (10, 10').

12. Stator in accordance with one of the preceding Claims, **characterized in that** the ring surface (10, 10') on the axially front face and/ or the axially rear face of the radially inner blade ring (1) and/or the radially outer blade ring is designed circular.

13. Stator in accordance with one of the preceding Claims, **characterized in that** the inner and/or the outer ring surface (10, 10') between all stator blades (2) of the stator (100) have/ has the same three-dimensional contour in each case.

14. Stator in accordance with one of the preceding Claims, **characterized in that** the radially outer blade ring (1) is part of the compressor casing (30).

## Revendications

1. Stator d'un étage de compresseur axial d'une turbomachine, lequel comprend :
- une couronne d'aubes (1') située radialement à l'extérieur, laquelle forme une surface de couronne extérieure (10'),
- une couronne d'aubes (1) située radialement à l'intérieur, laquelle forme une surface de couronne intérieure (10) et
- plusieurs aubes directrices (2) qui sont reliées aux couronnes d'aubes (1, 1'),
dans lequel la surface de couronne extérieure (10') et/ou la surface de couronne intérieure (10) présentent, au moins dans une région partielle, un rayon (r) variant par rapport à un axe central (20) du stator à la fois dans la direction axiale (x) et dans la direction périphérique (Φ),
dans lequel, pour au moins une coupe longitudinale à travers la couronne d'aubes (1') située radialement à l'extérieur et/ou la couronne d'aubes (1) située radialement à l'intérieur, une ligne de surface résultante (8) entre une valeur de départ (x_{Start}) axialement avant et une valeur finale (x_{Ende}) axialement arrière présente un rayon de variant de manière continue, dans lequel la valeur de départ (x_{Start}) axialement avant, considérée dans la direction axiale, se situe devant les bords avant des aubes directrices (2) et la valeur finale (x_{Ende}) axialement arrière, considérée dans la direction axiale, se situe derrière les bords arrière des aubes directrices (2), et la surface de couronne (10, 10') présentant la ligne de surface résultante (8) est formée de manière à présenter, dans la direction d'un côté frontal (12) axialement arrière de la couronne d'aubes (1, 1'), tout d'abord un évidement concave (51) et, de manière espacée axialement par rapport à celui-ci, un relief convexe (52), **caractérisé en ce que** la ligne de surface (8) présente, par rapport à un rayon moyen (r₀) de la couronne d'aubes (1, 1'), tout d'abord, à partir de la valeur de départ (x_{Start}) axialement avant, dans la région de l'évidement concave, exclusivement des valeurs inférieures au rayon moyen (r₀) puis, dans la région du relief convexe, jusqu'à la valeur finale (x_{Ende}) axialement arrière, exclusivement des valeurs supérieures au rayon moyen (r₀).

2. Stator selon la revendication 1, **caractérisé en ce que,** pour au moins une coupe à travers la couronne d'aubes (1') située radialement à l'extérieur et/ou la couronne d'aubes (1) située radialement à l'intérieur dans un plan perpendiculaire à l'axe central (20), la ligne de surface résultante (6) présente, dans la région entre deux aubes directrices (2), au moins dans certaines zones, un rayon variant de manière continue.

3. Stator selon la revendication 1 ou 2, **caractérisé en ce que,** pour au moins une coupe à travers la couronne d'aubes (1') située radialement à l'extérieur et/ou la couronne d'aubes (1) située radialement à l'intérieur dans un plan perpendiculaire à l'axe central (20), la ligne de surface résultante (6) est asymétrique dans la région entre deux aubes directrices (2).

4. Stator selon la revendication 3, **caractérisé en ce que** la surface de couronne (10) est, entre deux aubes directrices (2) adjacentes, formée de manière à présenter des rayons plus élevés de manière adjacente à l'extrados de l'une des aubes directrices (2) que de manière adjacente à l'intrados de l'autre aube directrice (2).

5. Stator selon l'une des revendications précédentes, **caractérisé en ce que,** pour au moins une coupe à travers la couronne d'aubes (1') située radialement à l'extérieur et/ou la couronne d'aubes (1) située radialement à l'intérieur dans un plan perpendiculaire à l'axe central (20), la ligne de surface résultante (6) est, dans la région entre deux aubes directrices (2), courbée de manière convexe dans au moins une zone.

6. Stator selon l'une des revendications précédentes, **caractérisé en ce que** la valeur de départ (x_{Start}) axialement avant se situe sur le côté frontal (11) axialement avant et la valeur finale (x_{Ende}) axialement arrière se situe sur le côté frontal (12) axialement arrière de la couronne d'aubes (1, 1').

7. Stator selon l'une des revendications précédentes, **caractérisé en ce que,** pour au moins une coupe longitudinale à travers la couronne d'aubes (1') située radialement à l'extérieur et/ou la couronne d'aubes (1) située radialement à l'intérieur, la ligne de surface résultante (8) est courbée de manière convexe dans au moins une zone.

8. Stator selon l'une des revendications précédentes, **caractérisé en ce qu'**une première ligne de surface (6) d'une première coupe à travers la couronne d'aubes (1') située radialement à l'extérieur et/ou la couronne d'aubes (1) située radialement à l'intérieur dans un plan perpendiculaire à l'axe central (20) se conforme à une fonction sinusoïdale, une fonction cosinusoïdale ou une combinaison de fonctions sinusoïdales et cosinusoïdales.

9. Stator selon la revendication 8, **caractérisé en ce qu'**au moins une deuxième ligne de surface (6) d'une deuxième coupe, adjacente à la première coupe, à travers la couronne d'aubes (1, 1') dans un plan perpendiculaire à l'axe central (20) se conforme à la même fonction mathématique mais présente une autre phase (ϕ) et/ou une autre amplitude (A) par rapport à la première ligne de surface (6).

10. Stator selon la revendication 8 ou 9, **caractérisé en ce que** l'allure du rayon de la surface de couronne (10, 10') est paramétrée par l'amplitude (A) et/ou la phase (ϕ) d'une fonction trigonométrique ou de plusieurs fonctions trigonométriques superposées les unes aux autres, les valeurs d'amplitude (A) et/ou de phase (ϕ) étant dépendantes de l'angle périphérique (Φ) et de la position axiale (x).

11. Stator selon la revendication 10, **caractérisé en ce qu'**au plus 5 fonctions trigonométriques sont utilisées pour la définition de la forme tridimensionnelle de la surface de couronne (10, 10').

12. Stator selon l'une des revendications précédentes, **caractérisé en ce que** la surface de couronne (10, 10) est de forme circulaire au niveau du côté frontal axialement avant et/ou du côté frontal axialement arrière de la couronne d'aubes (1) située radialement à l'intérieur et/ou de la couronne d'aubes située radialement à l'extérieur.

13. Stator selon l'une des revendications précédentes, **caractérisé en ce que** les surfaces de couronne (10, 10') intérieure et/ou extérieure présentent respectivement la même forme tridimensionnelle entre toutes les aubes directrices (2) du stator (100).

14. Stator selon l'une des revendications précédentes, **caractérisé en ce que** la couronne d'aubes (1) située radialement à l'extérieur fait partie d'un carter de compresseur (30).
